(19) 

**Europäisches Patentamt**
**European Patent Office**
**Office européen des brevets**

(11) **EP 1 208 117 B1**

(12) **FASCICULE DE BREVET EUROPEEN**

(45) Date de publication et mention
de la délivrance du brevet:
**29.07.2009 Bulletin 2009/31**

(21) Numéro de dépôt: **00936938.0**

(22) Date de dépôt: **26.05.2000**

(51) Int Cl.:
*C08F 2/22* (2006.01)       *C08F 246/00* (2006.01)
*C14C 11/00* (2006.01)

(86) Numéro de dépôt international:
**PCT/FR2000/001430**

(87) Numéro de publication internationale:
**WO 2000/073354 (07.12.2000 Gazette 2000/49)**

(54) **DISPERSIONS AQUEUSES DE POLYMERES**

WÄSSRIGE POLYMERDISPERSIONEN

AQUEOUS POLYMER DISPERSIONS

(84) Etats contractants désignés:
**AT BE CH CY DE DK ES FI FR GB GR IE IT LI LU
MC NL PT SE**

(43) Date de publication de la demande:
**29.05.2002 Bulletin 2002/22**

(73) Titulaire: **Cray Valley S.A.
92400 Courbevoie (FR)**

(72) Inventeurs:
• **SAIJA, Léo, Mario
I-42011 Bagnolo in Piano (IT)**

• **LUGLI, Mario
I-42042 Fabbrico (IT)**
• **BECCHI, Daniele
I-42100 Reggio Emilia (IT)**

(74) Mandataire: **Chaillot, Geneviève
Cabinet Chaillot
16-20, avenue de l'Agent Sarre
B.P. 74
92703 Colombes Cedex (FR)**

(56) Documents cités:
**EP-A- 0 387 664          WO-A-91/02007
WO-A-95/13331**

**Description**

La présente invention concerne des dispersions aqueuses de polymères acryliques pour le traitement de vernissage du cuir.

Spécifiquement, l'invention concerne des films obtenus à partir de dispersions aqueuses de polymères acryliques qui confèrent au cuir traité une très bonne combinaison de douceur, élasticité, résistance à l'abrasion, tant sec que mouillé, résistance à l'eau et aux solvants, une très bonne acceptation de l'impression, une bonne adhérence au substrat en cuir.

On sait, d'après l'art antérieur, que la technique de finition du cuir, appelée vernissage, fait appel à l'emploi de liants polymères capables de former des films, ayant des propriétés mécaniques appropriées et caractérisés par une bonne adhérence au substrat. Après l'opération de séchage, le film de polymère doit atteindre un degré de réticulation apte à conférer au cuir traité des caractéristiques de douceur, d'élasticité et de résistance à l'abrasion. Cette caractéristique est particulièrement importante dans le cas des cuirs (croûtes) soumis à des opérations de compression et de moulage. Dans ce cas, il est nécessaire que le film de polymère résiste à l'action d'impression, à savoir qu'il ne présente pas de fissures et qu'il soit en même temps suffisamment plastique pour conserver les profils d'impression voulus.

Dans l'art antérieur, pour atteindre cette très bonne combinaison de propriétés, on utilise des systèmes à deux composants. Par exemple, on peut utiliser des dispersions acryliques fonctionnalisées, des dispersions de polyuréthanne, etc., en combinaison avec des agents de réticulation tels que, par exemple, des polyaziridines, des polycarbodiimides, des polyisocyanates, etc. Les dispersions de polyuréthanne donnent une très bonne combinaison de propriétés à l'article final manufacturé, mais présentent l'inconvénient d'être trop coûteuses. Dans les systèmes à deux composants, les agents de réticulation réagissent, généralement à la température ambiante au moment de la formation du film, avec les groupes fonctionnels présents dans les chaînes polymères en dispersion. L'utilisation de systèmes à deux composants crée l'inconvénient d'une durée de vie en pot très limitée, une fois que les composants ont été mélangés. Par ailleurs, il est nécessaire d'insister sur la très grande toxicité de certains agents de réticulation, par exemple les polyaziridines. Ces systèmes à deux composants sont décrits, par exemple, dans l'article de la revue scientifique "Matériaux de tannage des cuirs de peau", année 68, n° 5, septembre-octobre 1992, intitulé "Art antérieur et développements possibles à moyen terme des nouvelles technologies de vernissage des cuirs, en particulier avec des solvants à base d'eau", de A. Cozzolino, pages 503-520.

Une variante aux systèmes à deux composants dans l'art antérieur est constituée des dispersions autoréticulables disponibles dans le commerce, dans lesquelles la réticulation se fait par l'intermédiaire de groupes fonctionnels déjà présents dans les chaînes polymères en interaction au cours de la phase de coalescence de la dispersion. Les dispersions acryliques fonctionnalisées avec du N-méthylol-acrylamide (NMA) peuvent être citées en exemple. L'inconvénient de ces dispersions est qu'elles nécessitent une température élevée, supérieure à 100°C, pour arriver au terme de la réticulation en des temps acceptables au plan industriel. Voir Chemical Abstract 127 192133f "Préparation d'une émulsion de polyacrylate modifié à deux fonctionnalités en tant qu'agent de vernissage du cuir"; Chemical Abstract 128 90271c "Préparation d'une résine de revêtement acrylique de la série MS avec une technologie à réseaux interpénétrants".

D'autres dispersions autoréticulables sont celles comprenant des métaux divalents, par exemple des métaux de transition, décrites dans EP 789 082 et le brevet US 5 723 782. L'inconvenient de ces dispersions est qu'elles contiennent une concentration de métaux lourds qui réduite sauvent en une incompatibilité avec les lois de certains pays.

Les dispersions aqueuses autoréticulables à base de polymères acryliques fonctionnalisés avec une (méth) acroléine sont également connues. Ces dispersions sont celles qui sont les plus utilisées sur le marché, étant donné qu'elles permettent d'obtenir des films polymères caractérisés par un bon compromis entre les propriétés mécaniques, la résistance aux solvants et l'absence de caractère collant. Même si, du point de vue de l'utilisateur final, ils ne présentent pas de problème de nature toxicologique, les systèmes à base de (méth)acroléine sont difficiles à manier pour le producteur de la dispersion polymère. La (méth)acroléine présente effectivement l'inconvénient d'être un monomère très réactif, volatil et extrêmement toxique, qui conduit à des problèmes du point de vue du transport et du maniement.

On ressent le besoin de disposer de dispersions aqueuses autoréticulables n'impliquant pas pour le producteur des dispersions les inconvénients mentionnés ci-dessus des systèmes à base de (méth)acroléine, mais conférant au cuir traité une très bonne combinaison de douceur, élasticité, résistance à l'abrasion tant sec que mouillé, résistance à l'eau et aux solvants, une très bonne acceptation de l'impression, une bonne adhérence au substrat en cuir.

Un but de la présente invention réside donc dans des dispersions aqueuses de polymères acryliques comprenant les constituants suivants:

a) de 40 à 95% en poids d'un ou plusieurs monomères contenant une insaturation éthylénique, dont l'homopolymère correspondant à une température de transition vitreuse ($T_v$) inférieure à 0°C, de préférence inférieure à -20°C; le constituant a) comprenant aussi éventuellement les monomères contenant le groupe fonctionnel défini en d), à raison de 20-50% en poids par rapport à la quantité définie en d),

b) de 4 à 58% en poids d'un ou plusieurs monomères contenant une insaturation éthylénique, dont l'homopolymère correspondant à une $T_v$ Supérieure à 0°C, de préférence supérieure à 40°C étant exclue du constituant b) la (méth) acroléine, éventuellement comprenant aussi les monomères contenant les groupes fonctionnels définis en d), à raison de 20-50% en poids par rapport à la quantité définie an d),

c) de 0,05 à 4% en poids d'un ou plusieurs monomères contenant au moins deux insaturations éthyléniques,

d) de 0,2 à 5%, de préférence 0,5-3%, en poids d'un ou plusieurs monomères contenant une insaturation de type éthylénique et au moins un groupe fonctionnel susceptible d'interagir à basse température, inférieur à 100°C, dans le procédé de réticulation dans la phase de coalescence, le constituant d) étant selectionné parmi la composés silanes insaturés.

De préférence, les dispersions de l'invention comprennent les constituants suivants

a) de 40 à 95% en poids d'un ou plusieurs monomères contenant une insaturation éthylénique, dont l'homopolymère correspondant à une température de transition vitreuse ($T_v$) inférieure à 0°C, de préférence inférieure à -20°C étant exclus du constituant a) les monomères contenant les groupes fonctionnels définis en d),

b) de 4 à 58% en poids d'un ou plusieurs monomères contenant une insaturation éthylénique, dont l'homopolymère correspondant à une $T_v$ supérieure à 0°C, de préférence supérieure à 40°C; étant exclue du constituant b) la (méth) acroléine et les monomères contenant les groupes fonctionnels définis en d),

c) de 0,05 à 2% en poids d'un ou plusieurs monomères contenant au moins deux insaturations éthyléniques,

d) de 0,2 à 5%, de preférence 0,5-3%, en poids d'un ou plusieurs monomères contenant une insaturation de type éthylénique et au moins un groupe fonctionnel susceptible d'interagir à basse température (inférieure à 100°C) dans le procédé de réticulation dans la phase de coalescence, le constituant d) étant sélectionné parmi les composés silanes insaturés

De préférence, dans les dispersions de l'invention, le constituant d) est ajouté après environ les deux tiers de la polymérisation des constituants a) + b) + c) par rapport au total de a) + b) + c).

En tant que constituant a), on peut utiliser des monomères de type (méth)acrylique, vinylique, etc. Généralement, les monomères du constituant a) possèdent de 4 à 20 atomes de carbone, de préférence de 5 à 15 atomes de carbone. Les esters acryliques ou méthacrylique, par exemple l'acrylate d'éthyle, l'acrylarte de butyle, le (méth)acrylate de 2-éthylhexyle, peuvent être mentionnés par exemple.

En tant que constituant b), on peut utiliser des monomères de type (méth)acrylique, vinylique, etc. Généralement, les monomères du constituant b) possèdent de 3 à 20 atomes de carbone, de préférence de 3 à 10 atomes de carbone. Les esters acryliques ou méthacryliques, de préférence le méthacrylate de méthyle, le méthacrylate d'éthyle, l'acrylonitrile, le styrène, l'acétate de vinyle, peuvent être mentionnés.

En tant que constituant c), on peut utiliser des monomères contenant deux insaturations éthyléniques, de type acrylique, vinylique, allylique, tels que, par exemple, le méthacrylate d'allyle, le di(méth)acrylate d'éthylèneglycol (EGD (M)A) ; des monomères contenant plus de deux insaturations du type susmentionné sont ceux que l'on préfère comme constituant c), par exemple le tri(méth)acrylate de triméthylolpropane (TMPTA).

En tant que constituant d), on peut utiliser des monomères contenant une insaturation de type éthylénique et au moins un groupe fonctionnel susceptible d'interagir dans le procédé de réticulation dans la phase de coalescence en formant des liaisons covalentes ou des liaisons hydrogène, de préférence covalentes. Les groupes fonctionnels peuvent être identiques ou différents les uns des autres et sont des groupes silanes

Par exemple, on peut mentionner les composés silane insaturés, tels que, les alcoxysilanes, de préférence comportant une insaturation de type vinylique, où le radical alcoxyalkyle possède de 1 à 10 atomes de carbone, de préférence plus de 2. Comme monomères d) préférés, on utilise ceux susceptibles de donner des liaisons covalentes, éventuellement en présence de monomères susceptibles de donner des liaisons hydrogène.

En tant que constituant d), on utilise un monomère de type silane, tel que défini. Si on le souhaite, on peut aussi ajouter le monomère due type silane à une combinaison de monomères ayant un groupe fonctionnel différent.

Les dispersions préférées de l'invention contiennent de 60 à 90% en poids du constituant a), de 5 à 30% du constituant b), de 0,5 à 1,5% en poids du constituant c), de 0,5 à 4% du constituant d).

Les dispersions de la présente invention s'obtiennent par un procédé do polymérisation radicalaire de type semi-continu, en émulsion aqueuse, dans lequel une partie de la pré-émulsion de monomères préparée antérieurement est introduite dans le réacteur au début de la polymérisation, tandis que la partie restante de la pré-émulsion est ensuite introduite immédiatement après le pic exothermique. Généralement, le pic exothermique apparaît au bout de 5-20 minutes.

Un procédé préféré pour obtenir les dispersions de l'invention comprend la préparation d'une pré-émulsion constituée des constituants a) + b) + c), l'introduction de 2-10% en poids de celle-ci dans le réacteur de polymérisation pour amorcer la réaction; au pic exothermique, le reste de la pré-émulsion de a) + b) + c) est introduit à un débit constant

en l'espace de 2 à 5 heures jusqu'aux 2/3 de la quantité totale finale; à la fin, la partie restante de la pré-émulsion de a) + b) + c) enrichie en constituant d) dans les concentrations définies ci-dessus est introduite en l'espace de 30 minutes à environ 2,5 heures. Les durées d'alimentation sont cependant telles que la température dans le réacteur de polymérisation soit maintenue à une valeur prédéfinie.

Un procédé encore plus préféré pour obtenir les dispersions de l'invention consiste, après l'amorçage de la réaction avec une pré-émulsion constituée des constituants a) + b) + c), en une polymérisation séquentielle d'abord d'une pré-émulsion de a) + b) + c) puis d'une pré-émulsion de a) + b) + d), les pré-émulsions ayant le même rapport des constituants a)/b); la quantité en poids de la première pré-émulsion de a) + b) + c) représentant les 3/4 de la quantité totale des deux pré-émulsions, la quantité en poids de la deuxième pré-émulsion de a) + b) + d) représentant le 1/4 de la quantité totale des deux pré-émulsions.

Les systèmes initiateurs sont ceux connus dans l'art antérieur pour la polymérisation radicalaire de monomères en émulsion aqueuse. De préférence, on peut mentionner l'hydroperoxyde de t-butyle et/ou les sels persulfate, seuls ou en combinaison avec des sels métabisulfite et/ou des sels de fer, ou du formaldéhyde-sulfoxylate de sodium.

La préparation des pré-émulsions mentionnées ci-dessus est réalisée avec des procédés connus, grâce à l'emploi de tensioactifs. Par exemple, on peut mentionner les tensioactifs anioniques tels que les sels de métaux alcalins d'alcanesulfonates, par exemple le laurylsulfate de sodium; les tensioactifs non ioniques tels que les alkylphénols éthoxylés, par exemple le nonylphénol éthoxylé avec 20 moles d'oxyde d'éthylène, ou les alcools gras éthoxylés, par exemple les alcools gras en $C_{12}$-$C_{14}$ éthoxylés avec 30 moles d'oxyde d'éthylène.

La dispersion polymère de l'invention peut être stabilisée, si nécessaire, avec les tensioactifs mentionnés pour la préparation des pré-émulsions, de préférence les tensioactifs non ioniques.

Les températures de polymérisation utilisées sont de préférence dans la gamme de 30°-80°C.

Lorsque la polymérisation est terminée, les dispersions aqueuses de la présente invention sous forme de latex sont caractérisées d'un point de vue physico-chimique (voir les exemples); elles sont ensuite séchées pour donner des films polymères destinés à la caractérisation physico-chimique (voir les exemples).

Comme on l'a dit, les dispersions de l'invention sont particulièrement utiles pour la préparation de formulations à utiliser dans le traitement de vernissage du cuir avec la combinaison optimale des propriétés susmentionnées.

Les exemples suivants sont présentés à titre d'illustration, mais ne sont pas des limitations du cadre de l'invention.

EXEMPLES

Caractérisation

Les films polymères, obtenus par séchage de la dispersion dans des récipients en PTFE appropriés, ont été soumis à une caractérisation physico-chimique après 7 jours de conditionnement dans un environnement contrôlé, à une humidité relative de 50% et une température de 23°C.

Les principaux essais réalisés sont la mesure de la charge maximale, de l'allongement à la rupture, du retour élastique avec des charges statiques, de la dureté Shore A, et de l'absorption de l'eau, de l'alcool éthylique et de l'acétone. Ces paramètres ont été choisis étant donné qu'ils sont liés directement aux conditions d'emploi du produit.

- La détermination de la contrainte maximale et de l'allongement à la rupture a été faite selon la méthode DIN 53455, avec une éprouvette de type R et une vitesse de traction de 300 mm/min.
- La détermination du retour élastique avec une charge statique a été réalisée selon la méthode ASTM D412. Des éprouvettes de type 5, mentionnées dans DIN 53455, étirées à 400% ($I_a$) par rapport à leur longueur initiale ($I_i$) ont été maintenues sous étirement pendant 8 heures, puis on les a laissées revenir librement, en position verticale, à leur forme initiale pendant une durée de 16 heurtes, au bout de laquelle on a mesuré la longueur finale ($I_f$) des éprouvettes. Le retour élastique RE est exprimé de la manière suivante:

$$RE = (I_a - I_f) \ / \ (I_a - I_i) \ x \ 100$$

- La détermination des absorptions de l'eau, de l'éthanol et de l'acétone a été réalisée par immersion d'éprouvettes de dimensions 2 cm x 2 cm, de poids environ 1 g, dans le solvant approprié.

Les éprouvettes ont été pesées avant d'être immergées et pesées une nouvelle fois après une durée de 7 jours pour le solvant eau, 8 heures pour les autres solvants, après que l'on ait retiré, avec du papier buvard, le liquide éventuellement présent sur leur surface.

**4**

Caractérisation des vernis obtenus

Le traitement de vernissage est réalisé sur des peaux de veau (croûtes) en utilisant une formulation à base de dispersion polymère de formule suivante:

TABLEAU 1

| Constituant | Parties en poids |
|---|---|
| Cires en émulsion | 15,00 |
| Pigment | 15,00 |
| Dispersion polymère (50% de matière sèche) | 60,00 |
| Eau | 10,00 |

La formulation est appliquée par pulvérisation, de telle manière qu'après 10 minutes de séchage à 60°C, elle donne une quantité de 200-250 g/m$^2$. Le cuir est ensuite soumis à un procédé d'impression à une température d'environ 90°C, sous une pression de 300 atm et pendant un temps de contact d'environ 5 secondes. Le cuir imprimé est ensuite vernis avec une couche légère à base de nitrocellulose.

Acceptation de l'impression

On évalue la qualité du procédé d'impression en contrôlant la résistance de la formulation à la fissuration dans le procédé d'impression, la définition et la rétention du dessin imprimé. Le résultat est exprimé sur une échelle de 1 à 5, où 5 indique l'absence totale de microfissures et une très bonne rétention de l'impression, tandis que 1 signifie un vernis totalement fissuré et/ou l'absence de rétention de l'impression.

Caractère collant

On évalue le caractère collant en observant la facilité du cuir fini à se détacher de la plaque chaude de la presse. Le résultat est exprimé sur une échelle de 1 à 3, où 3 indique l'absence de caractère collant et la facilité de libération de la plaque, tandis que 1 signifie un vernis très collant et difficile à détacher de la plaque.

Comportement en flexion à sec

Pour déterminer le comportement en flexion à sec des cuirs vernis avec les formulations obtenues à partir des dispersions polymères de l'invention, on utilise un flexomètre Bally selon le procédé basé sur la norme IUF 20 de l'Association Internationale des Chimistes du Cuir. Les éprouvettes (65 x 40 mu) sont soumises à des flexions et examinées après un certain nombre de cycles. L'essai est interrompu au nombre de cycles où 10 fissures ou plus apparaissent dans le vernis. Même si l'étendue des dommages dépend du type de cuir utilisé dans l'essai, une résistance égale à environ 10 000 flexions est considérée comme acceptable.

Résistance au frottement humide

Pour déterminer les résistances au frottement humide des cuirs vernis, on utilise la méthode VESLIC C4500. Des éprouvettes en cuir sec de dimensions 115 x 38 mm sont abrasées avec une bourre de feutre humide et chargées avec une pression de 1 kg/cm$^2$. On enregistre le nombre de cycles nécessaire pour transférer une coloration légère à la bourre.

Résistance aux solvants

On effectue la détermination de la résistance du vernis aux solvants acétoniques et nitrés en observant le comportement après le contact avec une goutte de solvant. Le résultat est exprimé sur une échelle de 1 à 3, où 3 indique un vernis complètement inchangé et 1 indique un vernis dissous ou éliminé.

EXEMPLE 1 (comparatif)

Dans un réacteur de verre, équipé d'un réfrigérant, d'un agitateur, d'un système de régulation de la température et d'une entrée d'azote, on introduit des solutions d'initiateur et d'alimentation en pré-émulsion, 1 355 g d'eau déminéralisée, ainsi que 4,3 g de laurylsulfate de sodium. Dans un autre récipient, équipé d'un agitateur (pré-émulsionneur), on prépare une émulsion, constitué de 1 765 g d'eau déminéralisée, 18 g de laurylsulfate de sodium, 3 185 g d'acrylate de n-butyle, 540 g d'acrylonitrile, 77 g d'acide méthacrylique et 38 g d'acroléine. Lorsque la température dans le réacteur atteint 50°C, on y introduit 300 g de la pré-émulsion de monomères préparée au préalable et on y ajoute, successivement, 19 g de persulfate de sodium dissous dans 130 g d'eau déminéralisée, 24 mg de sulfate ferreux dissous dans 5 g d'eau déminéralisée et 0,4 g de métabisulfite de sodium dissous dans 5 g d'eau déminéralisée.

Lorsque l'amorçage a commencé, la température à l'intérieur du réacteur s'élève d'environ 10°C (pic exothermique). Une minute après avoir atteint le pic exothermique, on ajoute au contenu du réacteur, à un débit constant, sur une durée de 4 heures, la partie restante de l'émulsion de monomères, ainsi que 3,45 g de métabisulfite de sodium dilué avec 157 g d'eau déminéralisée, en faisant attention de maintenir le contenu du réacteur, pendant la durée de l'alimentation, à une température de 60°C. Lorsque l'alimentation est terminée, on maintient le réacteur pendant une demi-heure à la température de 60°C, puis on ajoute, à un débit constant, en l'espace de 75 minutes, 4,5 g d'hydroperoxyde de t-butyle dissous dans 28 g d'eau déminéralisée et 3,4 g de formaldéhyde-sulfoxylate de sodium dissous dans 80 g d'eau. On maintient le mélange réactionnel à 60°C pendant encore une demi-heure, après quoi on le refroidit à la température de 35°C et on ajoute 19 g de triéthylamine, 18 g d'ammoniaque à 28 Bé et 110 g d'eau déminéralisée, puis on poursuit le refroidissement jusqu'à la température ambiante. La dispersion ainsi obtenue, filtrée sur un tamis de 36 mesh, est caractérisée par un résidu sec de 50% (1 h à 105°C), un pH de 7,0, une teneur en pré-coagulum inférieure à 200 ppm et une viscosité (Brookfield RVT à 100 tours/min et 23°C) de 110 mPa.s.

EXEMPLE 2 (comparatif)

On répète la polymérisation de l'exemple 1, en ajoutant dans la pré-émulsion de monomères, au lieu de l'acroleine, une quantité molaire équivalente d'acrylamide.

EXEMPLE 3

Dans un réacteur du type décrit dans l'exemple 1, on introduit 1 355 g d'eau déminéralisée ainsi que 4,3 g de laurylsulfate de sodium. Dans un autre récipient, équipé d'un agitateur (pré-émulsionneur), on prépare une émulsion, constituée de 1 820 g d'eau déminéralisée, 18 g de laurylsulfate de sodium, 3 185 g d'acrylate de n-butyle (constituant a), 540 g d'acrylonitrile (constituant b), 77 g d'acide méthacrylique (constituant b), 22 g de triacrylate de triméthylolpropane (constituant c). Lorsque le contenu du réacteur atteint la température de 50°C, on y introduit 300 g de la pré-émulsion de monomères préparée au préalable, et on y ajoute, successivement, 19 g de persulfate de sodium dissous dans 130 g d'eau déminéralisée, 24 mg ce sulfate ferreux dissous dans 5 g d'eau déminéralisée et 0,4 g de métabisulfite de sodium dissous dans 5 g d'eau déminéralisée.

Lorsque l'amorçage a commencé, la température à l'intérieur du réacteur s'élève d'environ 10°C. Une minute après avoir atteint la temperature maximale, on ajoute au contenu du réacteur, à un débit constant, sur une durée de 4 heures, la partie restante de l'émulsion de monomères, ainsi que 3,45 g de métabisulfite de sodium dilué avec 157 g d'eau déminéralisée, en faisant attention de maintenir le contenu du réacteur, pendant la durée de l'alimentation, à une température de 60°C. Deux heures et demie après le début de l'alimentation, on ajoute 38 g de triisopropoxyvinylsilane (constituant d). Lorsque l'alimentation en pré-émulsion ressente est terminée, on maintient le contenu du réacteur pendant une demi-heure à la température de 60°C, puis on ajoute, à un débit constant, en l'espace de 75 minutes, 4,5 g d'hydroperoxyde de t-butyle dissous dans 28 g d'eau déminéralisée et 3,4 g de formaldéhyde-sulfoxylate de sodium dissous dans 80 g d'eau. On maintient le mélange réactionnel à 60°C pendant encore une demi-heure, après quoi on le refroidit à la température de 35°C et on ajoute 36 g d'ammoniaque à 28% et 110 g d'eau déminéralisée, puis on poursuit le refroidissement jusqu'à la température ambiante.

La dispersion ainsi obtenue, filtrée sur un tamis de 36 mesh, est caractérisée par an résidu sec de 50% (1 h à 105°C), un pH de 6,7, une teneur en pré-coagulum inférieure à 200 ppm et une viscosité (Brookfield RVT à 100 tours/min et 23°C) de 70 mPa.s.

EXEMPLE 4

Dans un réacteur du type décrit dans l'exemple 1, on introduit 1 355 g d'eau déminéralisée ainsi que 4,3 g de laurylsulfate de sodium. Dans un autre récipient, équipé d'un agitateur (pré-émulsionneur), on prépare une émulsion, constituée de 1 765 g d'eau déminéralisée, 18 g de laurylsulfate de sodium, 3 185 g d'acrylate de n-butyle (constituant a), 540 g d'acrylonitrile (constituant b), 77 g d'acide méthacrylique (constituant b), 2 g de diméthacrylate d'éthylèneglycol (constituant c). Lorsque tout le contenu du réacteur atteint la température de 50°C, on y introduit 300 g de la pré-émulsion de monomères préparée au préalable, et on y ajoute, successivement, 19 g de persulfate de sodium dissous dans 130 g d'eau déminéralisée, 24 mg de sulfate ferreux dissous dans 5 g d'eau déminéralisée et 0,4 g de métabisulfite de sodium dissous dans 5 g d'eau déminéralisée.

Lorsque l'alimentation est terminée, on ajoute à l'émulsion de monomères 76 g de triisopropoxyvinylsilane (constituant d).

Lorsque l'amorçage a commencé, la température à l'intérieur du réacteur s'élève d'environ 10°C. Une minute après avoir atteint la température maximale, on ajoute au contenu du réacteur, à un débit constant, sur une durée de 4 heures, la partie restante de l'émulsion de monomères, ainsi que 3,45 g de métabisulfite de sodium dilué avec 157 g d'eau déminéralisée, en faisant attention de maintenir le contenu du réacteur, pendant la durée de l'alimentation, à une température de 60°C. Lorsque l'alimentation en pré-émulsion restante est terminée, on maintient le contenu du réacteur pendant une demi-heure à la température de 60°C, puis on ajoute, à un débit constant, en l'espace de 75 minutes, 4,5 g d'hydroperoxyde de t-butyle dissous dans 28 g d'eau déminéralisée et 3,4 g de formaldéhyde-sulfoxylate de sodium dissous dans 80 g d'eau. On maintient le mélange réactionnel à 60°C pendant encore une demi-heure, après quoi on le refroidit à la température de 35°C et on ajoute 36 g d'ammoniaque à 28% et 110 g d'eau déminéralisée, puis on poursuit le refroidissement jusqu'à la température ambiante.

La dispersion ainsi obtenue, filtrée sur un tamis de 36 mesh, est caractérisée par un résidu sec de 49,8% (1 h à 105°C), un pH de 7,2, une teneur en pré-coagulum inférieure à 200 ppm et une viscosité (Brookfield RVT à 100 tours/min et 23°C) de 140 mPa.s.

EXEMPLE 5

On réalise la réaction en polymérisant successivement deux pré-émulsions ayant le même rapport des constituants a) /b), mais contenant respectivement le constituant c) et le constituant d) de l'exemple 5. Le rapport entre la pré-émulsion I et la pré-émulsion II est égal à 3:1.

Dans un réacteur du type décrit dans l'exemple 1, on introduit 1 345 g d'eau déminéralisée ainsi que 4,3 g de laurylsulfate de sodium. Dans un autre récipient, on prépare une pré-émulsion I, constituée de 1 190 g d'eau déminéralisée, 13,5 g de laurylsulfate de sodium, 2 387 g d'acrylate de n-butyle (constituant a), 404 g d'acrylonitrile (constituant b), 58 g d'acide méthacrylique (constituant b), 29 g de triacrylate de triméthylolpropane (constituant c). Séparément, dans un troisième récipient, on prépare une pré-émulsion II constituée de 395 g d'eau déminéralisée, 4,5 g de laurylsulfate de sodium, 796 g d'acrylate de n-butyle (constituant a), 134 g d'acrylonitrile (constituant b), 19 g d'acide méthacrylique (constituant b) et 28,7 g de triisopropoxyvinylsilane (constituant d). Lorsque le contenu du réacteur atteint la température de 50°C, on y introduit 300 g de la pré-émulsion I préparée au préalable, et on ajoute, successivement, 19 g de persulfate de sodium dissous dans 130 g d'eau déminéralisée, 24 mg de sulfate ferreux dissous dans 5 g d'eau déminéralisée et 0,4 g de métabisulfite de sodium dissous dans 5 g d'eau déminéralisée.

Lorsque l'amorçage a commencé, la température à l'intérieur du réacteur s'élève d'environ 10°C. Une minute après avoir atteint la température maximale, on ajoute au contenu du réacteur, à un débit constant, sur une durée de 3 heures, la partie restante de la pré-émulsion I, ainsi que 2,59 g de métabisulfite de sodium dissous dans 118 g d'eau déminéralisée, en faisant attention de maintenir le contenu du réacteur, pendant la durée de l'alimentation, à une température de 60°C. Lorsque l'alimentation en pré-émulsion I est terminée, on commence l'alimentation en pré-émulsion II pendant une heure, en même temps que 0,86 g de métabisulfite de Na dissous dans 39 g d'eau. Lorsque l'alimentation en pré-émulsion II est terminée, on maintient le réacteur pendant une demi-heure à la température de 60°C, puis on ajoute, à un débit constant, en l'espace de 75 minutes, 4,5 g d'hydroperoxyde de t-butyle dissous dans 28 g d'eau déminéralisée et 3,4 g de formaldéhyde-sulfoxylate de sodium dissous dans 80 g d'eau. On maintient le mélange réactionnel à 60°C pendant encore une demi-heure, après quoi on le refroidit à la température de 35°C et on ajoute 36 g d'ammoniaque à 28% et 110 g d'eau déminéralisée, puis on poursuit le refroidissement jusqu'à la température ambiante.

La dispersion ainsi obtenue, filtrée sur un tamis de 36 mesh, est caractérisée par un résidu sec de 50% (1 h à 105°C), un pH de 7,5, une teneur en pré-coagulum inférieure à 200 ppm (sur une maille de 275 mesh) et une viscosité (Brookfield RVT à 100 tours/min et 23°C) de 130 mPa.s.

Le tableau 2 présente les caractéristiques mécaniques des films polymères obtenus et leur absorption dans l'eau, l'éthanol, l'acétone. Les résultats des essais d'application sur le cuir sont regroupés dans le tableau 3.

TABLEAU 2

| Exemple | Contrainte à la rupture (N/mm$^2$) | Allongement à la rupture (%) | Déformation permanente à 400% (%) | Dureté Shore A | Absorption d'eau à 7 jours (%) | Absorption d'éthanol à 8 h (%) | Adsorption d'acétone à 8 h (%) |
|---|---|---|---|---|---|---|---|
| 1 (comp.) | 1,8 | 600 | 96 | 16 | 36 | 53 | 580 |

(suite)

| Exemple | Contrainte à la rupture (N/mm$^2$) | Allongement à la rupture (%) | Déformation permanente à 400% (%) | Dureté Shore A | Absorption d'eau à 7 jours (%) | Absorption d'éthanol à 8 h (%) | Adsorption d'acétone à 8 h (%) |
|---|---|---|---|---|---|---|---|
| 2 (comp.) | 2,8 | 910 | 71 | 21 | 40 | 62 | dissous |
| 3 | 2,5 | 890 | 94 | 18 | 17 | 59 | 880 |
| 4 | 3,7 | 560 | 97 | 23 | 33 | 54 | 440 |
| 5 | 2,5 | 940 | 94 | 18 | 20 | 55 | 750 |

TABLEAU 3

| Exemple | Acceptation de l'impression | Caractère collant | VESLIC humide Nombre de cycles | BALLY sec Nombre de flexions | Résistance à l'acétone | Résistance au solvant nitré |
|---|---|---|---|---|---|---|
| 1 (comp.) | 3 | 2 | 130 | 17 000 | 1 | 2/3 |
| 2 (comp.) | 1 | 3 | 20 | 2 000 | 1 | 1 |
| 3 | 4 | 2 | 140 | 20 000 | 3 | 3 |
| 4 | 3 | 2 | 80 | 6 000 | 1 | 3 |
| 5 | 4 | 2 | 160 | 20 000 | 3 | 3 |

**Revendications**

1. Dispersions aqueuses de polymères acryliques comprenant les constituants suivants :

   a) de 40 à 95% en poids d'un ou plusieurs monomères contenant une insaturation éthylénique, dont l'homopolymère correspondant à une température de transition vitreuse (T$_v$) inférieure à 0°C, de préférence inférieure à -20°C, le constituant a) comprenant aussi éventuellement les monomères contenant les groupes fonctionnels définis en d), à raison de 20-50% en poids par rapport à la quantité définie en d),
   b) de 4 à 58% en poids d'un ou plusieurs monomères contenant une insaturation éthylénique, dont l'homopo-lymère correspondent à une T$_v$ supérieure à 0°C, de préférence supérieure à 40°C étant exclue du constituant b) de la (méth)acroléine, éventuellement comprenant aussi les monomères contenant les groupes fonctionnels définis en d), à raison de 20-50% en poids par rapport à la quantité définie en d),
   c) de 0,05 à 4% en poids d'un ou plusieurs monomères contenant au moins deux insaturations éthyléniques,
   d) de 0,2 à 5%, de préférence 0,5-3%, en poids d'un ou plusieurs monomères contenant une insaturation de type éthylénique et au moins un groupe fonctionnel susceptible d'interagir à basse température, inférieure à 100°C, dans le procédé de réticulation dans la phase de coalescence, le constituant d) étant sélectionné parmi les composés silanes insaturés.

2. Dispersions aqueuses de polymères selon la revendication 1, dans lesquelles les composés silanes insaturés sont des alcoxysilanes.

3. Dispersions aqueuses de polymères selon l'une des revendications 1 ou 2, dans lesquelles les composés silanes comportent une insaturation de type vinylique.

4. Dispersions aqueuses de polymères selon l'une des revendications 1 à 3, comprenant les constituants suivants :

   a) de 40 à 95% en poids d'un ou plusieurs monomères contenant une insaturation éthylénique, dont l'homopolymère correspondant à une température de transition vitreuse (T$_v$) inférieure à 0°C, de préférence inférieure à -20°C étant exclus du constituant a) les monomères contenant les groupes fonctionnels définis en d),

b) de 4 à 58% en poids d'un ou plusieurs monomères contenant une insaturation éthylénique, dont l'homopolymère correspondant à une $T_v$ supérieure à 0°C, de préférence supérieure à 40°C étant exclus du constituant b) la (méth)acroléine et les monomères contenant les groupes fonctionnels définis en d),

c) de 0,05 à 4% en poids d'un ou plusieurs monomères contenant au moins deux insaturations éthyléniques,

d) de 0,2 à 5%, de préférence 0,5-3%, en poids d'un ou plusieurs monomères contenant une insaturation de type éthylénique et au moins un groupe fonctionnel susceptible d'interagir à basse température (inférieure à 100°C) dans le procédé de réticulation dans la phase de coalescence, ledit constituant d) étant sélectionné parmi les composés silanes insaturés.

5. Dispersions aqueuses de polymères selon l'une des revendications 1 à 4, dans lesquelles le constituant d) est ajouté après environ les deux tiers de la polymérisation des constituants a) + b) + c) par rapport au total de a) + b) + c).

6. Dispersions aqueuses de polymères selon l'une des revendications 1 à 5, dans lesquelles le constituant a) est choisi parmi les monomères de type (méth)acrylique, vinylique, possédant de 4 à 20 atomes de carbone, de préférence de 5 à 15 atomes de carbone.

7. Dispersions aqueuses de polymères selon la revendication 6, dans lesquelles le constituant a) est choisi parmi les esters acryliques ou méthacryliques, de préférence l'acrylate d'éthyle, l'acrylate de butyle, le (méth)acrylate de 2-éthylhexyle.

8. Dispersions aqueuses de polymères selon l'une des revendications 1 à 7, dans lesquelles le constituant b) est choisi parmi les monomères de type (méth)acrylique, vinylique, possédant de 3 à 20 atomes de carbone, de préférence de 3 à 10 atomes de carbone.

9. Dispersions aqueuses de polymères selon la revendication 8, dans lesquelles le constituant b) est choisi parmi les esters acrylique ou méthacryliques, de préférence le méthacrylate de méthyle, le méthacrylate d'éthyle, l'acrylonitrile, le styrène, l'acétate de vinyle.

10. Dispersions aqueuses de polymères selon l'une des revendications 1 à 9, dans lesquelles le constituant c) est choisi parmi les monomères contenant deux insaturations éthyléniques de type acrylique, vinylique, allylique, de préférence le méthacrylate d'allyle, le di(méth)acrylate d'éthylèneglycol ; les monomères contenant plus de deux insaturations du type susmentionné, de préférence le tri(méth)acrylate de triméthylolpropane.

11. Dispersions aqueuses de polymères selon l'une des revendications 1 à 10, comprenant de 60 à 90% en poids du constituant a), de 5 à 30% du constituant b), de 0.5 à 1,5% en poids du constituant c), de 0,5 à 4% du constituant d).

12. Procédé de préparation des dispersions aqueuses de polymères selon l'une des revendications 1 à 11, dans lequel la polymérisation est de type radicalaire, en émulsion aqueuse, dans lequel une partie de la pré-émulsion de monomères est introduite dans le réacteur pour démarrer la polymérisation, tandis que la partie restante de la pré-émulsion est introduite ensuite, immédiatement après le pic exothermique.

13. Procédé selon la revendication 12, comprenant la préparation d'une pré-émulsion constituée des constituants a) + b) + c), dont 2-10% en poids sont introduits dans le réacteur de polymérisation pour amorcer la réaction ; au pic exothermique, la partie restante de la pré-émulsion de a) + b) + c) étant introduite à un débit constant jusqu'aux 2/3 de la quantité totale finale et à la fin, la partie restante de la pré-émulsion de a) + b) + c) enrichie en constituant d) étant introduite.

14. Procédé selon la revendication 12, comprenant, après l'amorçage de la réaction avec une pré-émulsion constituée des constituants a) + b) + c), la polymérisation séquentielle d'abord d'une pré-émulsion de a) + b) + c), puis d'une pré-émulsion de a) + b) + d), les pré-émulsions ayant le même rapport des constituants a) /b) ; la quantité en poids de la première pré-émulsion de a) + b) + c) représentant les 3/4 de la quantité totale des deux pré-émulsions, la quantité en poids de la deuxième pré-émulsion de a) + b) + d) représentant le 1/4 de la quantité totale des deux pré-émulsions.

15. Procédé selon l'une des revendications 12 à 14, dans lequel la dispersion est stabilisée de préférence par des tensioactifs non ioniques.

16. Utilisation des dispersions aqueuses de polymères selon l'une des revendications 1 à 11 pour le traitement du vernissage du cuir.

**Claims**

1. Aqueous dispersions of acrylic polymers comprising the following constituents:

   a) from 40 to 95% by weight of one or more monomers comprising an ethylenic unsaturation, the corresponding homopolymer of which has a glass transition temperature ($T_g$) of less than 0°C, preferably of less than -20°C, the constituent a) also optionally comprising the monomers comprising the functional groups defined in d), in a proportion of 20-50% by weight with respect to the amount defined in d),
   b) from 4 to 58% by weight of one or more monomers comprising an ethylenic unsaturation, the corresponding homopolymer of which has a $T_g$ higher than 0°C, preferably higher than 40°C, (meth)acrolein being excluded from the constituent b), optionally also comprising the monomers comprising the functional groups defined in d), in a proportion of 20-50% by weight with respect to the amount defined in d),
   c) from 0.05 to 4% by weight of one or more monomers comprising at least two ethylenic unsaturations,
   d) from 0.2 to 5%, preferably 0.5-3%, by weight of one or more monomers comprising an unsaturation of ethylenic type and at least one functional group capable of interacting at low temperature, lower than 100°C, in the crosslinking process in the coalescence phase, the constituent d) being selected from unsaturated silane compounds.

2. Aqueous dispersions of polymers according to Claim 1, in which the unsaturated silane compounds are alkoxysilanes.

3. Aqueous dispersions of polymers according to either of Claims 1 and 2, in which the silane compounds comprise an unsaturation of vinyl type.

4. Aqueous dispersions of polymers according to one of Claims 1 to 3, comprising the following constituents:

   a) from 40 to 95% by weight of one or more monomers comprising an ethylenic unsaturation, the corresponding homopolymer of which has a glass transition temperature ($T_g$) of less than 0°C, preferably of less than -20°C, the monomers comprising the functional groups defined in d) being excluded from the constituent a),
   b) from 4 to 58% by weight of one or more monomers comprising an ethylenic unsaturation, the corresponding homopolymer of which has a $T_g$ higher than 0°C, preferably higher than 40°C, (meth)acrolein and the monomers comprising the functional groups defined in d) being excluded from the constituent b),
   c) from 0.05 to 4% by weight of one or more monomers comprising at least two ethylenic unsaturations,
   d) from 0.2 to 5%, preferably 0.5-3%, by weight of one or more monomers comprising an unsaturation of ethylenic type and at least one functional group capable of interacting at low temperature (lower than 100°C) in the crosslinking process in the coalescence phase, the said constituent d) being selected from unsaturated silane compounds.

5. Aqueous dispersions of polymers according to one of Claims 1 to 4, in which the constituent d) is added after the polymerization of about two thirds of the constituents a) + b) + c) with respect to the total of a) + b) + c).

6. Aqueous dispersions of polymers according to one of Claims 1 to 5, in which the constituent a) is chosen from monomers of (meth)acrylic or vinyl type, having from 4 to 20 carbon atoms, preferably from 5 to 15 carbon atoms.

7. Aqueous dispersions of polymers according to Claim 6, in which the constituent a) is chosen from acrylic or methacrylic esters, preferably ethyl acrylate, butyl acrylate or 2-ethylhexyl (meth)acrylate.

8. Aqueous dispersions of polymers according to one of Claims 1 to 7, in which the constituent b) is chosen from monomers of (meth)acrylic or vinyl type, having from 3 to 20 carbon atoms, preferably from 3 to 10 carbon atoms.

9. Aqueous dispersions of polymers according to Claim 8, in which the constituent b) is chosen from acrylic or methacrylic esters, preferably methyl methacrylate or ethyl methacrylate, acrylonitrile, styrene or vinyl acetate.

10. Aqueous dispersions of polymers according to one of Claims 1 to 9, in which the constituent c) is chosen from monomers comprising two ethylenic unsaturations of acrylic, vinyl or allyl type, preferably allyl methacrylate or ethylene glycol di(meth)acrylate, monomers comprising more than two unsaturations of the abovementioned type, preferably trimethylolpropane tri(meth)acrylate.

**11.** Aqueous dispersions of polymers according to one of Claims 1 to 10, comprising from 60 to 90% by weight of the constituent a), from 5 to 30% of the constituent b), from 0.5 to 1.5% by weight of the constituent c) and from 0.5 to 4% of the constituent d).

**12.** Process for the preparation of the aqueous dispersions of polymers according to one of Claims 1 to 11, in which the polymerization is of radical type, in aqueous emulsion, in which a part of the monomer preemulsion is introduced into the reactor to initiate the polymerization, while the remaining part of the preemulsion is introduced subsequently, immediately after the exothermic peak.

**13.** Process according to Claim 12, comprising the preparation of a preemulsion composed of the constituents a) + b) + c), 2-10% by weight of which are introduced into the polymerization reactor to initiate the reaction, at the exothermic peak, the remaining part of the preemulsion of a) + b) + c) being introduced at a constant flow rate up to 2/3 of the final total amount and at the end and the remaining part of the preemulsion of a) + b) + c), enriched in constituent d), being introduced.

**14.** Process according to Claim 12, comprising, after the initiation of the reaction with a preemulsion composed of the constituents a) + b) + c), the sequential polymerization, first of a preemulsion of a) + b) + c) and then of a preemulsion of a) + b) + d), the preemulsions having the same ratio of the constituents a)/b), the amount by weight of the first preemulsion of a) + b) + c) representing 3/4 of the total amount of the two preemulsions and the amount by weight of the second preemulsion of a) + b) + d) representing 1/4 of the total amount of the two preemulsions.

**15.** Process according to one of Claims 12 to 14, in which the dispersion is stabilized, preferably by nonionic surfactants.

**16.** Use of the aqueous dispersions of polymers according to one of Claims 1 to 11 in the finishing treatment of leather.

**Patentansprüche**

**1.** Wäßrige Dispersionen von Acrylpolymeren mit den folgenden Bestandteilen:

a) 40 bis 95 Ges.-% eines oder mehrerer Monomere mit einer ethylenischen Ungesättigtheit, deren entsprechendes Homopolymer eine Glasübergangstemperatur ($T_g$) von weniger als 0°C und vorzugsweise weniger als -20°C aufweist, wobei der Bestandteil a) außerdem gegebenenfalls Monomere mit den in d) definierten funktionellen Gruppen in einem Anteil von 20-50 Gew.-%, bezogen auf die in d) definierte Menge, enthält,
b) 4 bis 58 Ges.-% eines oder mehrerer Monomere mit einer ethylenischen Ungesättigtheit, deren entsprechendes Homopolymer eine $T_g$ von mehr als 0°C und vorzugsweise mehr als 40°C aufweist, wobei (Meth)acrolein aus dem Bestandteil b) ausgeschlossen ist, der außerdem gegebenenfalls Monomere mit den in d) definierten funktionellen Gruppen in einem Anteil von 20-50 Gew.-%, bezogen auf die in d) definierte Menge, enthält,
c) 0,05 bis 4 Gew.-% eines oder mehrerer Monomere mit mindestens zwei ethylenischen Ungesättigtheiten,
d) 0,2 bis 5 Gew.-% und vorzugsweise 0,5-3 Gew.-% eines oder mehrerer Monomere mit einer Ungesättigtheit vom ethylenischen Typ und mindestens einer funktionellen Gruppe, die bei niedriger Temperatur von weniger als 100°C beim Vernetzungsprozeß in der Koaleszenzphase wechselwirken kann, wobei der Bestandteil d) unter ungesättigten Silanverbindungen ausgewählt ist.

**2.** Wäßrige Polymerdispersionen nach Anspruch 1, in denen es sich bei den ungesättigten Silanverbindungen um Alkoxysilane handelt.

**3.** Wäßrige Polymerdispersionen nach einem der Ansprüche 1 oder 2, in denen die Silanverbindungen eine Ungesättigtheit vom Vinyltyp enthalten.

**4.** Wäßrige Polymerdispersionen nach einem der Ansprüche 1 bis 3 mit den folgenden Bestandteilen:

a) 40 bis 95 Ges.-% eines oder mehrerer Monomere mit einer ethylenischen Ungesättigtheit, deren entsprechendes Homopolymer eine Glasübergangstemperatur ($T_g$) von weniger als 0°C und vorzugsweise weniger als -20°C aufweist, wobei die Monomere mit den in d) definierten funktionellen Gruppen aus dem Bestandteil a) ausgeschlossen sind,

b) 4 bis 58 Ges.-% eines oder mehrerer Monomere mit einer ethylenischen Ungesättigtheit, deren entsprechendes Homopolymer eine $T_g$ von mehr als 0°C und vorzugsweise mehr als 40°C aufweist, wobei (Meth)acrolein und die Monomere mit den in d) definierten funktionellen Gruppen aus dem Bestandteil b) ausgeschlossen sind,
c) 0,05 bis 4 Gew.-% eines oder mehrerer Monomere mit mindestens zwei ethylenischen Ungesättigtheiten,
d) 0,2 bis 5 Gew.-% und vorzugsweise 0,5-3 Gew.-% eines oder mehrerer Monomere mit einer Ungesättigtheit vom ethylenischen Typ und mindestens einer funktionellen Gruppe, die bei niedriger Temperatur (weniger als 100°C) beim Vernetzungsprozeß in der Koaleszenzphase wechselwirken kann, wobei der Bestandteil d) unter ungesättigten Silanverbindungen ausgewählt ist.

5. Wäßrige Polymerdispersionen nach einem der Ansprüche 1 bis 4, in denen der Bestandteil d) nach ungefähr zwei Dritteln der Polymerisation der Bestandteile a) + b) + c), bezogen auf die Gesamtheit von a) + b) + c), zugegeben wird.

6. Wäßrige Polymerdispersionen nach einem der Ansprüche 1 bis 5, in denen der Bestandteil a) unter Monomeren vom (Meth)acryl- oder Vinyltyp mit 4 bis 20 Kohlenstoffatomen und vorzugsweise 5 bis 15 Kohlenstoffatomen ausgewählt ist.

7. Wäßrige Polymerdispersionen nach Anspruch 6, in denen der Bestandteil a) unter Acrylsäure- oder Methacrylsäureestern, vorzugsweise Ethylacrylat, Butylacrylat oder 2-Ethylhexyl(meth)acrylat, ausgewählt ist.

8. Wäßrige Polymerdispersionen nach einem der Ansprüche 1 bis 7, in denen der Bestandteil b) unter Monomeren vom (Meth)acryl- oder Vinyltyp mit 3 bis 20 Kohlenstoffatomen und vorzugsweise 3 bis 10 Kohlenstoffatomen ausgewählt ist.

9. Wäßrige Polymerdispersionen nach Anspruch 8, in denen der Bestandteil b) unter Acrylsäure- oder Methacrylsäureestern, vorzugsweise Methylmethacrylat, Ethylmethacrylat, Acrylnitril, Styrol oder Vinylacetat, ausgewählt ist.

10. Wäßrige Polymerdispersionen nach einem der Ansprüche 1 bis 9, in denen der Bestandteil c) unter Monomeren mit zwei ethylenischen Ungesättigtheiten vom Acryl-, Vinyl- oder Allyltyp, vorzugsweise Allylmethacrylat oder Ethylenglykoldi(meth)acrylat; oder Monomeren mit mehr als zwei Ungesättigtheiten des oben erwähnten Typs, vorzugsweise Trimethylolpropantri(meth)acrylat, ausgewählt ist.

11. Wäßrige Polymerdispersionen nach einem der Ansprüche 1 bis 10 mit 60 bis 90 Gew.-% des Bestandteils a), 5 bis 30% des Bestandteils b), 0,5 bis 1,5 Gew.-% des Bestandteils c) und 0,5 bis 4% des Bestandteils d).

12. Verfahren zur Herstellung der wäßrigen Polymerdispersionen nach einem der Ansprüche 1 bis 11, bei dem die Polymerisation vom radikalischen Typ in wäßriger Emulsion ist, wobei ein Teil der Monomerenvoremulsion zum Starten der Polymerisation in den Reaktor eingetragen wird, während der restliche Teil der Voremulsion danach, unmittelbar nach dem exothermen Peak, eingetragen wird.

13. Verfahren nach Anspruch 12, bei dem eine Voremulsion aus den Bestandteilen a) + b) + c) hergestellt wird, von der 2-10 Gew.-% zur Initiierung der Reaktion in den Polymerisationsreaktor eingetragen werden; am exothermen Peak wird der restliche Teil der Voremulsion von a) + b) + c) bis zu 2/3 der Endgesamtmenge bei einer konstanten Strömungsrate eingetragen, und am Ende wird der mit Bestandteil d) angereicherte restliche Teil der Voremulsion von a) + b) + c) eingetragen.

14. Verfahren nach Anspruch 12, bei dem nach der Initiierung der Reaktion mit einer Voremulsion aus den Bestandteilen a) + b) + c) zunächst eine Voremulsion von a) + b) + c) und dann eine Voremulsion von a) + b) + d) sequentiell polymerisiert wird, wobei die Voremulsionen das gleiche Verhältnis der Bestandteile a)/b) aufweisen, die Gewichtsmenge der ersten Voremulsion von a) + b) + c) 3/4 der Gesamtmenge der beiden Voremulsionen ausmacht und die Gewichtsmenge der zweiten Voremulsion von a) + b) + d) 1/4 der Gesamtmenge der beiden Voremulsionen ausmacht.

15. Verfahren nach einem der Ansprüche 12 bis 14, bei dem die Dispersion stabilisiert wird, vorzugsweise mit nichtionischen Tensiden.

16. Verwendung der wäßrigen Polymerdispersionen nach einem der Ansprüche 1 bis 11 zur Lederzurichtungsbehandlung.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US EP789082 A

- US 5723782 A

**Littérature non-brevet citée dans la description**

- **A. Cozzolino.** Art antérieur et développements possibles à moyen terme des nouvelles technologies de vernissage des cuirs, en particulier avec des solvants à base d'eau. *Matériaux de tannage des cuirs de peau,* Septembre 1992, 503-520

- *CHEMICAL ABSTRACTS,* 127 192133f
- *CHEMICAL ABSTRACTS,* 128 90271c